# FASCICULE DE BREVET EUROPEEN

(11) **EP 0 710 786 B1**
(45) Date de publication et mention de la délivrance du brevet: **06.05.1999**
(21) Numéro de dépôt: 95460038.3
(22) Date de dépôt: 06.10.1995
(51) Int. Cl.: F16H 57/02, F16H 3/089

(54) **Boîte de vitesses**
Schaltgetriebe
Gearbox

(30) Priorité: 04.11.1994 FR 9413503
(43) Date de publication de la demande: 08.05.1996
(73) Titulaire: AUTOMOBILES PEUGEOT, 75116 Paris (FR); AUTOMOBILES CITROEN, 92200 Neuilly-sur-Seine (FR)
(72) Inventeur: Petiot, Jean-Paul, F-91460 Marcoussis (FR)
(74) Mandataire: Le Faou, Daniel

(56) Documents cités:
- EP-A- 0 219 240
- EP-A- 0 393 246
- DE-A- 4 041 899
- US-A- 3 916 712

## Description

La présente invention concerne une boîte de vitesses, notamment pour véhicule automobile.

Elle concerne également une entretoise destinée à supporter un roulement de guidage de l'arbre secondaire d'une telle boîte.

Les boîtes de vitesses traditionnelles comprennent deux arbres parallèles guidés en rotation dans un carter : un arbre primaire, qui est entraîné par le moteur du véhicule, et un arbre secondaire, qui entraîne les roues par l'intermédiaire d'un différentiel.

L'arbre primaire porte un certain nombre de pignons, qui lui sont solidaires aussi bien en rotation qu'en translation.

L'arbre secondaire porte un nombre identique de pignons engrenant chacun avec un pignon de l'arbre primaire.

Chaque jeu de pignons a un rapport de démultiplication différent, correspondant au rapport de leurs diamètres.

Pour la marche arrière, les pignons engrènent indirectement l'un avec l'autre, par l'intermédiaire d'un troisième pignon qui assure l'inversion de sens du mouvement.

Les pignons de l'arbre secondaire sont montés fous sur ce dernier. Des synchroniseurs, commandés par le levier de changement de vitesses, leurs sont associés, dont la fonction est d'accoupler sélectivement l'un des pignons avec l'arbre secondaire.

Dans un type de boîte connu, notamment destiné à être placé transversalement par rapport à l'axe longitudinal du véhicule, les arbres primaire et secondaire ressortent du carter par des portions d'extrémité situées du même côté. La portion d'extrémité opposée de l'arbre secondaire est guidée dans le carter par l'intermédiaire d'un roulement (à billes, aiguilles ou rouleaux) qui est bloqué en bout d'arbre par un écrou.

Un tel agencement est décrit par exemple dans le document EP-A-0 393 246, sur le dessin duquel l'arbre secondaire et le roulement en bout d'arbre portent respectivement les références 7 et 14, l'écrou de blocage du roulement y étant représenté, mais non référencé.

Lorsque la boîte de vitesses est disposée transversalement, sa longueur est un facteur important de dimensionnement de la voie du véhicule.

L'objectif de l'invention est de réduire cette longueur et, par conséquent, de limiter l'encombrement pris par la boîte dans la direction transversale du véhicule.

Cet objectif est atteint, conformément à l'invention, grâce au fait que, d'une part, le roulement qui guide dans le carter la portion d'extrémité de l'arbre secondaire opposée au différentiel est porté par une entretoise tubulaire qui est montée sur l'arbre et présente une cavité recevant l'écrou de blocage, et que, d'autre part, sur cette entretoise est guidé en rotation, par l'intermédiaire d'un second roulement, un pignon de transmission fou qui est en prise avec un pignon de l'arbre primaire.

Grâce à cette disposition, les encombrements respectifs, selon la direction axiale de l'arbre, du roulement et de son écrou de blocage ne s'ajoutent pas. L'encombrement de l'écrou est en grande partie confondu avec celui du roulement, à l'intérieur duquel il vient en quelque sorte se loger.

Par le document US-A-3 916 712, on connaît un dispositif monté à l'extrémité d'un arbre intermédiaire de boîte de vitesses, qui consiste en une extension d'arbre comprenant un manchon guidé dans un roulement. Ce manchon, claveté sur l'extrémité d'arbre constitue un double pignon d'entraînement de l'arbre secondaire et d'un pignon intermédiaire de marche arrière. La liaison en bout d'arbre du manchon est réalisée au moyen d'une vis dont la tige est vissée dans l'arbre et dont la tête s'applique contre une rondelle venant en appui contre le manchon, à l'intérieur d'une cavité ménagée dans celui-ci.

Un tel montage permet de résoudre des problèmes d'ajustement de l'arbre dans trois roulements, le manchon précité ayant une certaine liberté de mouvement par rapport au reste de l'arbre.

Il n'apporte pas de solution au problème de réduction d'encombrement sus-mentionné.

Par ailleurs, selon une caractéristique avantageuse, mais non limitative, de l'invention, ce pignon fou est associé et accolé à un synchroniseur monté sur l'arbre secondaire, et l'extrémité de l'entretoise opposée à la cavité vient en butée contre le moyeu du synchroniseur.

On notera que le DE-A-4 041 899 enseigne de monter en bout d'arbre une entretoise tubulaire sur laquelle est guidé en rotation un pignon de transmission fou ; toutefois, cette entretoise qui est fixée à l'arbre par une vis, est guidée en rotation par un roulement intérieur porté par un tronçon d'arbre fixe, solidaire du carter.

Ce dispositif possède donc une structure très particulière, différente de l'objet de l'invention.

D'autres caractéristiques et avantages de l'invention apparaîtront de la description et des dessins annexés, qui en présentent deux modes de réalisation préférentiels.

La figure 1 est une vue générale, en coupe axiale, d'une boîte de vitesses conforme à l'invention, objet d'un premier mode de réalisation.

La figure 2 est une vue similaire, mais partielle, montrant uniquement la partie d'extrémité de la boîte où se trouve l'entretoise, d'un second mode de réalisation possible.

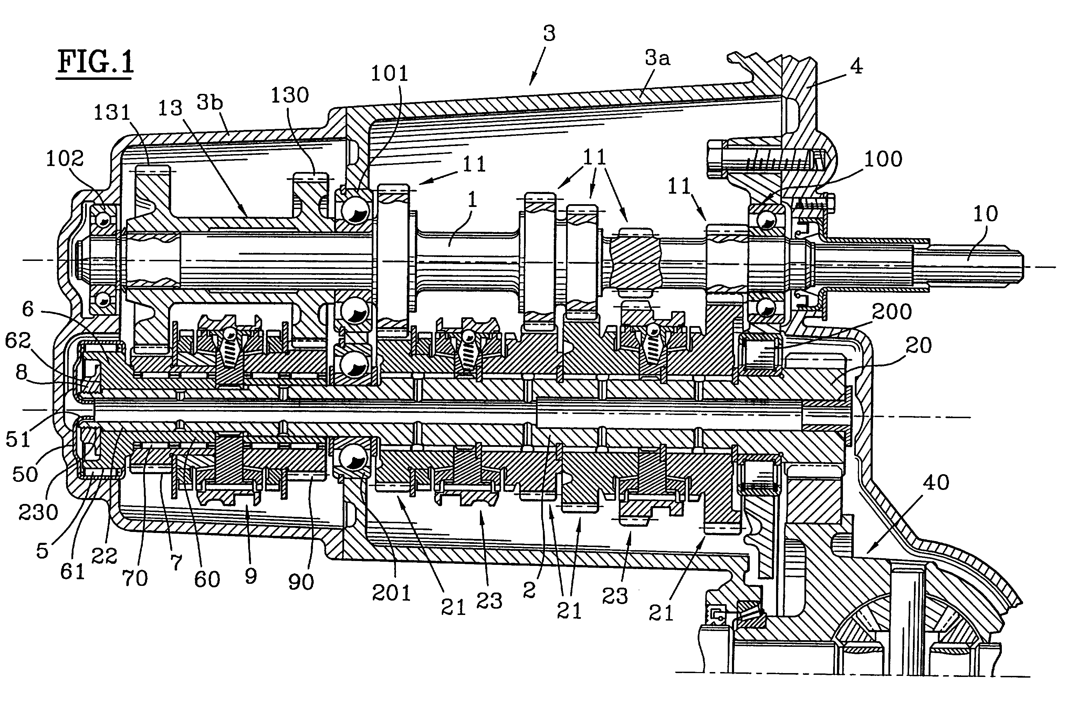

La boîte de vitesses pour véhicule automobile illustrée à la figure 1 comporte des arbres primaire 1 et secondaire 2, d'axes horizontaux parallèles, guidés en rotation dans un carter 3. Ce dernier est formé de deux parties 3a, 3b, et est fixé au carter d'embrayage 4. L'arbre 2 est percé axialement d'un alésage : il est donc tubulaire.

L'arbre 1 est guidé en rotation dans le carter, d'une part dans ses portions d'extrémité par des roulements à billes 100, 102, d'autre part dans une portion intermédiaire par un roulement à billes 101.

L'une des portions d'extrémité, à droite sur la figure, ressort du carter par une partie dépassante 10. Cette dernière est accouplée à la sortie de l'embrayage (non représenté).

La boîte de vitesses illustrée est à six vitesses.

Les pignons des quatre premières vitesses, et celui de la marche arrière, référencés 11, forment parties intégrantes de l'arbre primaire et sont positionnés sur le tronçon de l'arbre compris entre le roulement intermédiaire 101 et celui 100 qui se trouve du côté de l'extrémité 10 qui sort du carter.

Les pignons 130 et 131 des cinquième et sixième vitesses sont formés sur un manchon tubulaire 13 qui est solidaire, aussi bien en rotation qu'en translation, de l'arbre 1. Ils sont positionnés entre les roulements 101 et 102.

De manière connue, l'arbre secondaire 2 porte un ensemble de pignons fous, en prise chacun avec un pignon de l'arbre primaire. Les pignons associés aux pignons 11 sont référencés 21. Ceux associés aux pignons 130 et 131 sont respectivement référencés 90 et 7.

Sur l'arbre 2, entre les différents pignons sont montés des synchroniseurs aptes à solidariser en rotation l'un des pignons, de manière sélective, avec l'arbre 2.

Les synchroniseurs des pignons 21 sont référencés 23, tandis que celui des pignons de cinquième 90 et de sixième 7 est référencé 9.

L'arbre secondaire - comme l'arbre primaire - est guidé en rotation dans le carter par trois roulements, à savoir deux roulements d'extrémité, en l'occurrence à rouleaux 200 et à aiguilles 5, et un roulement à billes intermédiaire 201. Du même côté que l'arbre primaire, côté qui correspond au roulement 200, l'arbre secondaire 2 ressort du carter par un prolongement 20. Ce dernier consiste en un pignon qui est en prise avec un pignon du différentiel 40, qu'il entraîne.

L'extrémité opposée de l'arbre secondaire 2, référencée 22, n'est pas guidée directement dans le roulement à aiguilles 5. En effet, sur cette portion d'extrémité 22 est emmanchée une entretoise tubulaire 6. Elle a une paroi extérieure cylindrique étagée, composée d'une partie interne (c'est-à-dire dirigée vers l'intérieur du carter) 60 de petit diamètre, et une partie externe 61 de plus grand diamètre. Cette dernière joue le rôle de bague intérieure pour le roulement 5, qu'elle supporte.

La portion d'extrémité 230 de l'arbre 2 est filetée, et reçoit un écrou 8. Celui-ci assure la retenue de l'entretoise 6 sur l'arbre, en la maintenant appliquée (de l'autre côté) contre le moyeu du synchroniseur 9.

Selon une caractéristique essentielle de l'invention, l'entretoise 6 présente, sur sa face externe, un évidement cylindrique (coaxial à l'entretoise) 62. C'est dans cette cavité que vient se loger l'écrou 8 une fois qu'il a été vissé à fond sur l'arbre 2. Comme on le voit sur la figure 1, il se trouve donc complètement, ou presque, dans un espace situé à l'intérieur du roulement à aiguilles 5. Ainsi, la longueur axiale de l'écrou (c'est-à-dire son épaisseur) ne vient pas s'ajouter à celle du roulement, pour ce qui est de leur encombrement global.

On notera, par ailleurs, que le pignon fou de sixième 7 est supporté par un second roulement à aiguilles 70, monté sur la partie interne 60 de l'entretoise 6.

La bague extérieure du premier roulement 5 est constituée par une pièce 50 en forme de coupelle, dont la partie centrale est conformée en col 51 s'engageant avec jeu dans l'alésage central de l'arbre secondaire 2, et servant à lubrifier ce dernier.

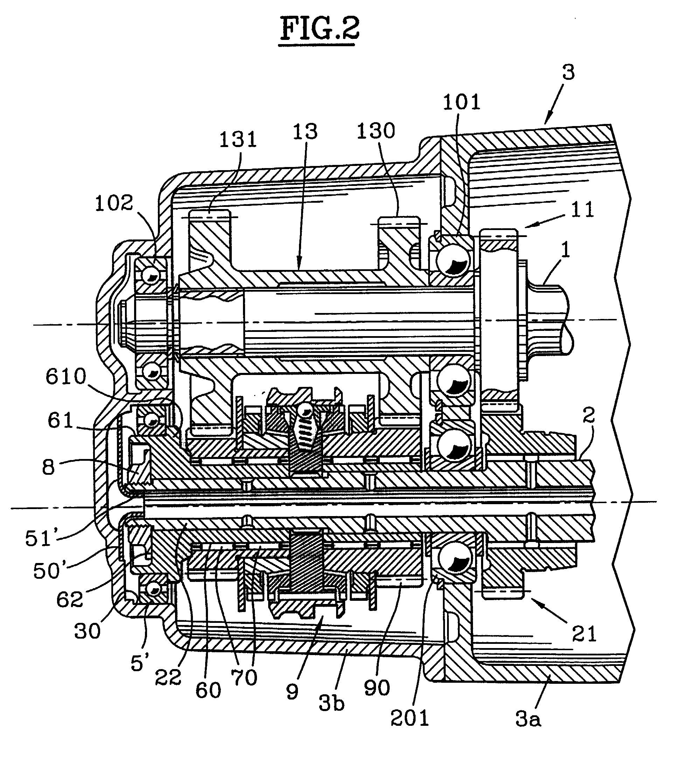

Les mêmes références ont été attribuées aux éléments constitutifs du second mode de réalisation illustré à la figure 2, qui sont identiques ou similaires à ceux du premier.

L'entretoise 6 est guidée ici dans un roulement à billes 5', dont la bague intérieure vient en appui contre un épaulement 610 qui borde, côté intérieur du carter, la surface de paroi 61.

La bague extérieure du roulement 5' est insérée dans un logement cylindrique 30 du carter.

Enfin, on retrouve encore dans ce second mode de réalisation une pièce 50' ayant une partie en forme de col 51' s'engageant avec jeu dans l'alésage central de l'arbre secondaire pour lubrifier ce dernier.

## Revendications

1. Boîte de vitesses, notamment pour véhicule automobile, qui comporte un arbre primaire (1) et un arbre secondaire (2) à axes parallèles tous deux guidés en rotation dans un carter (3), l'une (20) des deux portions d'extrémités de l'arbre secondaire (2) ressortant du carter (3) pour entraîner un différentiel (40), tandis que sa portion d'extrémité opposée (22) est guidée dans un roulement (5, 5') bloqué en bout d'arbre par un écrou (8), caractérisée par le fait que, d'une part, ledit roulement (5, 5') est porté par une entretoise tubulaire (6) montée sur l'arbre (2) et présentant une cavité (62) recevant ledit écrou et que, d'autre part, sur ladite entretoise (6) est guidé en rotation, par l'intermédiaire d'un second roulement (70), un pignon de transmission fou (7) qui est en prise avec un pignon (131) de l'arbre primaire (1).

2. Boîte de vitesses selon la revendication 1, caractérisée par le fait que ledit pignon fou (7) est associé et accolé à un synchroniseur (9) monté sur l'arbre secondaire et que l'extrémité de l'entretoise (6) opposée à la cavité (62) vient en butée contre le moyeu du synchroniseur.

## Patentansprüche

1. Schaltgetriebe, insbesondere für Fahrzeuge, welches eine Achswelle (1) und eine Hauptwelle (2) mit parallelen Achsen aufweist, welche beide in Drehbewegung in einem Gehäuse (3) geführt werden, wobei einer (20) der beiden Endbereiche der Hauptwelle (2) aus dem Gehäuse (3) herausragt, um ein Differential (40) anzutreiben, während ihr entgegengesetzter Endbereich (22) in einem Wälzlager (5, 5') geführt wird, welches an dem Wellenende durch eine Mutter (8) blockiert ist, dadurch gekennzeichnet, daß einerseits das Wälzlager (5, 5') von einem röhrenförmigen Steg (6) getragen wird, welcher auf der Welle (2) angebracht ist und eine die Mutter aufnehmende Aushöhlung (62) aufweist, und daß andererseits ein bewegliches Übersetzungsgetrieberad (7), welches im Eingriff mit einem Getrieberad (131) der Achswelle (1) ist, auf dem Steg (6) mittels eines zweiten Wälzlagers (70) in Drehbewegung geführt wird.

2. Schaltgetriebe gemäß Anspruch 1, dadurch gekennzeichnet, daß das bewegliche Getrieberad (7) mit einem auf der Hauptwelle angebrachten Synchronisator (9) verbunden und an diesen angefügt ist, und daß das der Aushöhlung (62) gegenüberliegende Ende des Steges (6) in Anschlag gegen die Nabe des Synchronisators kommt.

## Claims

1. A gearbox, in particular for a motor vehicle. the gearbox comprising a primary shaft (1) and a secondary shaft (2) having parallel axes and both guided to rotate in a casing (3), one (20) of the two end portions of the secondary shaft (2) projecting from the casing (3) to drive a differential (40), while its opposite end portion (22) is guided in a bearing (5. 5') that is locked on the end of the shaft by a nut (8). the gearbox being characterized by the facts that firstly said bearing (5, 5') is carried by a tubular spacer (6) mounted on the shaft (2) and having a cavity (62) for receiving said screw, and secondly that a loose transmission gear wheel (7) is guided to rotate on said spacer (6) via a second bearing (70), which gear wheel meshes with a gear wheel (131) of the primary shaft (1).

2. A gearbox according to claim 1, characterized by the facts that said loose gear wheel (7) is associated with and adjacent to a synchronizer (9) mounted on the secondary shaft, and that the end of the spacer (6) remote from the cavity (62) comes into abutment against the hub of the synchronizer.
